# EUROPEAN PATENT APPLICATION

(11) **EP 3 623 844 A1**
(43) Date of publication of application: **18.03.2020**
(21) Application number: 17911618.1
(22) Date of filing: 02.06.2017
(51) Int. Cl.: G01S 17/87, G01S 17/93

(54) **OBSTACLE DETECTION METHOD AND DEVICE**

(71) Applicant: Huawei Technologies Co., Ltd., Longgang District Shenzhen, Guangdong 518129 (CN)
(72) Inventor: CAO, Tongtong, Shenzhen Guangdong 518129 (CN); SHAO, Yunfeng, Shenzhen Guangdong 518129 (CN)
(74) Representative: MERH-IP Matias Erny Reichl Hoffmann Patentanwälte PartG mbB
(86) International application number: PCT/CN2017/087041
(87) International publication number: WO 2018/218680

(57) **Abstract**

An obstacle detection method and a system (100) are provided, to improve obstacle recognition precision and avoid a relatively large data processing volume. The method includes: receiving, by an obstacle information processing device (110), description information of n obstacles collected by an obstacle detection data collector (120) for a target transport means, and updating an obstacle information list based on the description information of the n obstacles, to obtain an updated obstacle information list; obtaining, by the obstacle information processing device (110), target area information and non-target area information based on the updated obstacle information list, and sending the target area information and the non-target area information to a laser radar data collector (130); receiving, by the obstacle information processing device (110), a sampling point set collected by the laser radar data collector (130); and finally obtaining, by the obstacle information processing device (110), an obstacle detection result based on the sampling point set and the updated obstacle information list. Therefore, a relatively large data processing volume is avoided, and obstacle recognition precision is ensured.

## Description

### TECHNICAL FIELD

This application relates to the field of detection technologies, and in particular, to an obstacle detection method and a device.

### BACKGROUND

Obstacle detection and recognition are important factors for ensuring safety of a vehicle in a self-driving state. Only after obstacles around the vehicle such as a vehicle, a pedestrian, and a building are correctly recognized, an accessible area of the vehicle and a current road condition status can be determined, to further provide subsequent planning and decision-making for vehicle driving. Therefore, an obstacle detection system in the vehicle plays an important role in ensuring driving safety of a vehicle in a self-driving state.

In the obstacle detection system, common sensors include a visual sensor, a millimeter-wave radar sensor, a laser radar sensor, and the like.

The visual sensor such as a monocular camera or a binocular camera can collect video information of surroundings of a vehicle, and perform recognition and feature extraction on an obstacle in a video to obtain information such as a location and a speed of the obstacle. The visual sensor is characterized by the following: Azimuth information is accurate, but information such as a distance and a speed is relatively inaccurate.

The millimeter-wave radar sensor can obtain information such as a location and a speed of an obstacle. The millimeter-wave radar sensor is characterized by the following: The location and the speed are relatively accurate, but contour information of the obstacle is not included. In other words, the millimeter-wave radar sensor cannot obtain information such as a size and a shape of the obstacle. In addition, erroneous obstacle detection occurs.

The laser radar sensor can obtain point cloud data of an ambient environment of a vehicle, and can obtain information such as a location and a contour of an obstacle through point cloud data clustering. The laser radar sensor is characterized by the following: The location and the contour are accurate, but speed information is not included.

Therefore, to overcome a disadvantage of obstacle detection by a single sensor, an existing obstacle detection system usually uses a method for detecting an obstacle through multisensor fusion, to overcome the disadvantage of the single sensor.

For example, a plurality of sensors are separately used to collect obstacle information in an ambient environment of the vehicle, and then the obstacle information separately collected by the plurality of sensors is converted into a same coordinate system such as a vehicle body coordinate system for data fusion. A multi-dimensional obstacle attribute feature may be extracted through data fusion. For example, the multi-dimensional obstacle attribute feature includes both speed information collected by the millimeter-wave radar sensor and contour information collected by the laser radar sensor. However, a distant obstacle recognized by using this method is relatively inaccurate. Although a capability of recognizing the distant obstacle can be improved by increasing a scanning angle resolution of the laser radar sensor, a huge quantity of processor resources need to be consumed to extract contour information of the obstacle from a large amount of point cloud data collected by the laser radar sensor. Consequently, obstacle information is updated relatively slowly, and a relatively long delay is caused.

### SUMMARY

Embodiments of this application provide an obstacle detection method and a device, to improve obstacle recognition precision and avoid a relatively large data processing volume.

According to a first aspect, an obstacle detection method includes: receiving, by an obstacle information processing device, description information of n obstacles collected by an obstacle detection data collector for a target transport means, where n is a positive integer; updating, by the obstacle information processing device, an obstacle information list based on the description information of the n obstacles, to obtain an updated obstacle information list; obtaining target area information and non-target area information based on the updated obstacle information list; and sending the target area information and the non-target area information to a laser radar data collector, so that a quantity of sampling points collected by the laser radar data collector in a unit volume of each target area is greater than a quantity of sampling points collected by the laser radar data collector in a unit volume of each non-target area, where the target area information is used to indicate at least one target area, the non-target area information is used to indicate at least one non-target area, the target area is an area including an obstacle, and the non-target area is an area including no obstacle, or the target area is an area that includes an obstacle meeting a preset screening condition, and the non-target area is an area that includes no obstacle meeting the preset screening condition; receiving, by the obstacle information processing device, a sampling point set collected by the laser radar data collector, where the sampling point set includes a quantity of sampling points collected by the laser radar data collector in the at least one target area and a quantity of sampling points collected by the laser radar data collector in the at least one non-target area; and finally obtaining, by the obstacle information processing device, an obstacle detection result based on the sampling point set and the updated obstacle information list. Therefore, the obstacle detection data collector first obtains the description information of the obstacle collected by the obstacle detection data collector, and then updates the obstacle information list. The obstacle information processing device obtains the target area information and the non-target area information based on the updated obstacle information list, so that the laser radar data collector obtains sampling point sets with different precision for different areas. Therefore, a relatively large data processing volume is avoided, and obstacle recognition precision is ensured. The obstacle information processing device obtains the final obstacle detection result based on the obtained sampling point set and the updated obstacle information list. Therefore, according to the method provided in this embodiment of this application, a relatively large data processing volume is avoided, and obstacle recognition precision is improved. In addition, problems such as a processing latency and a breakdown that are further caused by excessive consumption of computing resources caused by an excessively large data processing volume are effectively avoided.

In a possible design, the obstacle detection data collector includes at least one visual sensor and/or at least one millimeter-wave radar sensor. It should be understood that the obstacle detection data collector herein may alternatively be a sensor of another type. Using of the design provided in this embodiment of this application ensures flexibility of a system structure and diversity of a sampling result.

In a possible design, the target area information further includes a first signal transmission parameter, and the non-target area information further includes a second signal transmission parameter. The first signal transmission parameter is greater than the second signal transmission parameter. In addition/Alternatively, the target area information further includes a first signal receiving sampling parameter, and the non-target area information further includes a second signal receiving sampling parameter. The first signal receiving sampling parameter is greater than the second signal receiving sampling parameter. Therefore, according to the method provided in this embodiment of this application, a relatively large quantity of sampling points are obtained in a unit volume of the target area, so that precision of contour information of an obstacle can be effectively ensured, and a relatively small quantity of sampling points are obtained in a unit volume of the non-target area, so that a data processing volume can be effectively reduced.

It should be understood that, in a possible implementation, the target area information includes the first signal transmission parameter, and the non-target area information includes the second signal transmission parameter. In addition, the target area information further includes the first signal receiving sampling parameter, and the non-target area information further includes the second signal receiving sampling parameter. In other words, two or more groups of optional parameters are provided, so that the laser radar data collector selects one group of parameters or two groups of parameters (for example, selects one group of parameters for transmission and one group of parameters for receiving) for data collection.

In addition, when the target area information does not include the first signal transmission parameter, and the non-target area information does not include the second signal transmission parameter, and when the target area information does not include the first signal receiving sampling parameter, and the non-target area information does not include the second signal receiving sampling parameter, a laser radar controller in the laser radar data collector may separately perform data collection in the target area and the non-target area based on two preconfigured signal transmission parameters and/or two preconfigured signal receiving sampling parameters.

In a possible design, the obstacle information list includes m pieces of obstacle information, and m is a positive integer. The obstacle information processing device may update the obstacle information list based on the description information of the n obstacles to obtain the updated obstacle information list by using, but not limited to, the following method: obtaining, by the obstacle information processing device, n first distances based on the description information of the n obstacles, where each of the n first distances is distance between the target transport means and each of the n obstacles corresponding to the description information of the n obstacles; and obtaining, by the obstacle information processing device, m second distances based on the m pieces of obstacle information included in the obstacle information list, where each of the m second distances is a distance between the target transport means and each of m obstacles corresponding to the m pieces of obstacle information, and the updating, by the obstacle information processing device, the obstacle information list for an i^{th} first distance, where i is any integer from 1 to n includes the following several possible cases: (1) when a difference between the i^{th} first distance and each second distance is greater than a preset threshold, adding, by the obstacle information processing device, description information of an obstacle corresponding to the i^{th} first distance to the obstacle information list; (2) when each of t calculated differences between the i^{th} first distance and each of t second distances is less than or equal to the preset threshold, determining, by the obstacle information processing device, that the obstacle corresponding to the i^{th} first distance is the same as an obstacle corresponding to a target second distance, and updating, based on the description information of the obstacle corresponding to the i^{th} first distance, obstacle information of the obstacle corresponding to the target second distance, where the target second distance is a second distance corresponding to a smallest difference in the t differences, t ≤ m, and t is a positive integer; and (3) when only a difference between the i^{th} first distance and a j^{th} second distance is less than or equal to the preset threshold, determining, by the obstacle information processing device, that the obstacle corresponding to the i^{th} first distance is the same as an obstacle corresponding to the j^{th} second distance, and updating, based on the description information of the obstacle corresponding to the i^{th} first distance, obstacle information of the obstacle corresponding to the j^{th} second distance, where the j^{th} second distance is any one of the m second distances. Therefore, accuracy of the updated obstacle information list is ensured.

It should be understood that the foregoing update rules are based on the distance between the obstacle and the target transport means, or may use or be based on another parameter, for example, the obstacle direction angle. In addition, when the obstacle detection data collector is a sensor combination, the obstacle information list needs to be updated by using the description information of the obstacle separately collected by the plurality of sensors. A specific process is not described in detail again.

If a time interval at which the obstacle detection data collector collects the description information of the obstacle for the target transport means is relatively large, each piece of obstacle information in the obstacle information list may be further predicted with reference to a motion status of the target transport means and the obstacle information list, to ensure time synchronization between each piece of information. Then, matching is performed based on the predicted obstacle information list and the description information of the obstacle collected by the obstacle detection data collector, to ensure accuracy of the updated obstacle information list.

In a possible design, the updated obstacle information list includes at least one piece of obstacle information, and each piece of obstacle information includes an obstacle direction angle. The obstacle information processing device may obtain the target area information and the non-target area information based on the updated obstacle information list by using the following method: determining, by the obstacle information processing device, a direction angle interval of one target area as the target area information based on the obstacle direction angle included in each piece of obstacle information, where the target area is the area including an obstacle; and determining, by the obstacle information processing device, a direction angle interval of the at least one non-target area as the non-target area information based on the target area information and a maximum direction angle collection range of the laser radar data collector, where the non-target area is the area including no obstacle. Therefore, relatively high precision of each piece of obtained contour information of the obstacle is ensured.

In a possible design, the updated obstacle information list includes at least one piece of obstacle information, and each piece of obstacle information includes an obstacle direction angle. The obstacle information processing device may obtain the target area information and the non-target area information based on the updated obstacle information list by using the following method: obtaining, by the obstacle information processing device through screening from the at least one piece of obstacle information based on the at least one piece of obstacle information and the preset screening condition, at least one piece of obstacle information meeting the preset screening condition; determining, by the obstacle information processing device, a direction angle interval of one target area as the target area information based on an obstacle direction angle included in each piece of obstacle information meeting the preset screening condition, where the target area is the area that includes an obstacle meeting the preset screening condition; and determining, by the obstacle information processing device, a direction angle interval of the at least one non-target area as the non-target area information based on the target area information and a maximum direction angle collection range of the laser radar data collector, where the non-target area is the area that includes no obstacle meeting the preset screening condition. Therefore, obstacle information meeting the preset condition is screened, to decrease a quantity of target areas, and further reduce a data processing volume.

In addition, the obstacle information processing device may further predict each piece of obstacle information in the updated obstacle information list with reference to the motion status of the target transport means and the updated obstacle information list, to ensure time synchronization between each piece of information. Then, the target area information and the non-target area information are obtained based on the predicted obstacle information list. Therefore, accuracy of the determined target area can be better ensured.

In a possible design, the updated obstacle information list includes at least one piece of obstacle information, and each piece of obstacle information includes an obstacle direction angle. The obstacle information processing device may obtain the obstacle detection result based on the sampling point set and the updated obstacle information list by using the following method: determining, by the obstacle information processing device, a direction angle interval of a k^{th} area based on an obstacle direction angle included in a k^{th} piece of obstacle information, where the k^{th} piece of obstacle information is any one of the at least one piece of obstacle information; determining, by the obstacle information processing device, a k^{th} target sampling point set from the sampling point set based on the direction angle interval of the k^{th} area, where the k^{th} target sampling point set includes a sampling point that is in the sampling point set and that is collected at the direction angle interval of the k^{th} area; obtaining, by the obstacle information processing device, contour information of at least one obstacle based on the k^{th} target sampling point set; obtaining, by the obstacle information processing device, at least one determining distance based on the contour information of the at least one obstacle, where each determining distance is a difference between a distance from the target transport means to an obstacle corresponding to contour information of the obstacle and a distance from the target transport means to an obstacle corresponding to the k^{th} piece of obstacle information; and further using a first detection result as the obstacle detection result, where the first detection result includes contour information of an obstacle corresponding to a determining distance that is greater than a preset distance threshold in the at least one determining distance, and/or using a second detection result and the k^{th} piece of obstacle information as the obstacle detection result, where the second detection result is contour information of an obstacle corresponding to a determining distance that is less than or equal to the preset distance threshold in the at least one determining distance. Therefore, accuracy and effectiveness of the finally obtained obstacle detection result can be ensured.

In a possible design, the method further includes: when the obstacle information processing device does not determine the k^{th} target sampling point set, determining that the obstacle detection result does not include the k^{th} piece of obstacle information; or when the obstacle information processing device does not determine the k^{th} target sampling point set, if the target area information includes the direction angle interval of the k^{th} target area, determining that the obstacle detection result does not include the k^{th} piece of obstacle information; or if the target area information does not include the direction angle interval of the k^{th} target area, reducing a preset value of an obstacle existence probability included in the k^{th} piece of obstacle information, to obtain updated k^{th} piece of obstacle information; and using the updated k^{th} piece of obstacle information as the obstacle detection result, where each piece of obstacle information includes an obstacle existence probability. Therefore, comprehensiveness of the obstacle detection result can be ensured.

In a possible design, the method further includes: determining, by the obstacle information processing device, a non-target sampling point set based on the sampling point set and a target sampling point set corresponding to the at least one piece of obstacle information; determining, by the obstacle information processing device, the contour information of the at least one obstacle based on the non-target sampling point set, and using the contour information of the at least one obstacle as a third detection result; and using, by the obstacle information processing device, the third detection result as the obstacle detection result. Therefore, the entire sampling point set can be effectively used, and comprehensiveness of the obstacle detection result can be ensured.

In addition, based on an idea same as the foregoing method, the obstacle information processing device first obtains the contour information of the at least one obstacle based on the sampling point set, and uses the contour information as a contour information set. In this case, the obstacle information processing device determines the direction angle interval of the k^{th} area based on the obstacle direction angle included in the k^{th} piece of obstacle information. Then, the obstacle information processing device determines a k^{th} target contour information set from the contour information set based on the direction angle interval of the k^{th} area. Next, the obstacle information processing device obtains the at least one determining distance based on the contour information of the at least one obstacle included in the k^{th} target contour information set. A subsequent processing process is the same as that in the foregoing method, and is not described herein again. Likewise, after the obstacle information processing device obtains the obstacle detection result based on the contour information set and a target contour information set corresponding to the at least one piece of obstacle information, the obstacle information processing device may use contour information in the contour information set except the target contour information set corresponding to the at least one piece of obstacle information as the obstacle detection result.

It should be understood that the obstacle information processing device may also not obtain contour information of any obstacle based on the sampling point set. In this case, it indicates that no obstacle is found in the collection range of the laser radar data collector.

In addition, the obstacle information processing device may further predict each piece of obstacle information in the updated obstacle information list with reference to the motion status of the target transport means and the updated obstacle information list, to ensure time synchronization between each piece of information. Then, the obstacle detection result is obtained based on the sampling point set and the predicted obstacle information list. Therefore, accuracy of the obstacle detection result can be better ensured.

In a possible design, the obstacle information processing device replaces the updated obstacle information list with the obstacle detection result. Therefore, timely update of the obstacle information list can be ensured, and accuracy of the obstacle detection result can be ensured.

According to a second aspect, an obstacle detection method includes: receiving, by a laser radar data collector, target area information and non-target area information that are sent by an obstacle information processing device, where the target area information is used to indicate at least one target area, the non-target area information is used to indicate at least one non-target area, the target area is an area including an obstacle, and the non-target area is an area including no obstacle, or the target area is an area that includes an obstacle meeting a preset screening condition, and the non-target area is an area that includes no obstacle meeting the preset screening condition; performing, by the laser radar data collector, data collection based on the target area information and the non-target area information, to obtain a sampling point set, where the sampling point set includes a quantity of sampling points collected by the laser radar data collector in the at least one target area and a quantity of sampling points collected by the laser radar data collector in the at least one non-target area, and a quantity of sampling points collected in a unit volume of each target area is greater than a quantity of sampling points collected in a unit volume of each non-target area; and sending, by the laser radar data collector, the sampling point set to the obstacle information processing device. Therefore, according to the method provided in this embodiment of this application, the laser radar data collector obtains a sampling point set with relatively high precision in the target area, and a sampling point set with relatively low precision in the non-target area. In this way, not only obstacle recognition precision is ensured, but also a relatively large data processing volume is avoided. Therefore, problems such as a processing latency and a breakdown that are further caused by excessive consumption of computing resources caused by an excessively large data processing volume are effectively avoided.

In a possible design, the target area information further includes a first signal transmission parameter, and the non-target area information further includes a second signal transmission parameter. The first signal transmission parameter is greater than the second signal transmission parameter. In addition/Alternatively, the target area information further includes a first signal receiving sampling parameter, and the non-target area information further includes a second signal receiving sampling parameter. The first signal receiving sampling parameter is greater than the second signal receiving sampling parameter. Therefore, it can be ensured that the laser radar data collector obtains the sampling point set with relatively high precision in the target area, and obtains the sampling point set with relatively low precision in the non-target area.

According to a third aspect, an obstacle information processing device is provided, including a transceiver, a processor, and a memory. The transceiver is configured to receive and send information. The memory is configured to store a program, an instruction, or code. The processor is configured to execute the program, the instruction, or the code in the memory, to complete the method in any one of the first aspect or the possible implementations of the first aspect.

According to a fourth aspect, a laser radar data collector is provided, including a signal transmitter, a laser radar sensor, a laser radar controller, and a signal receiver. The signal transmitter is connected to the laser radar sensor, the signal receiver is connected to the laser radar controller, and the laser radar sensor is connected to the laser radar controller. The laser radar controller is configured to control the laser radar sensor, to complete the method in any one of the second aspect or the possible implementations of the second aspect.

According to a fifth aspect, an obstacle detection system includes the obstacle information processing device in the third aspect, and the laser radar data collector and the obstacle detection data collector in the fourth aspect.

According to a sixth aspect, this application provides a computer-readable storage medium, and the computer-readable storage medium stores an instruction. When the instruction is run on a computer, the computer is enabled to perform the method in any one of the first aspect or the possible designs of the first aspect.

According to a seventh aspect, this application further provides a computer program product including an instruction. When the computer program product is run on a computer, the computer is enabled to perform the method in any one of the first aspect or the possible designs of the first aspect.

### BRIEF DESCRIPTION OF DRAWINGS

FIG. 1 is a schematic diagram of an obstacle detection system according to an embodiment of this application;
FIG. 2 is a schematic diagram of an obstacle information processing device according to an embodiment of this application;
FIG. 3 is a schematic diagram of an obstacle detection data collector according to an embodiment of this application;
FIG. 4 is a schematic diagram of a laser radar data collector according to an embodiment of this application;
FIG. 5 is an overview flowchart 1 of an obstacle detection method according to an embodiment of this application;
FIG. 6 is a schematic diagram 1 of a target area and a non-target area according to an embodiment of this application;
FIG. 7 is a schematic diagram 2 of a target area and a non-target area according to an embodiment of this application;
FIG. 8 is a specific flowchart 1 for implementing obstacle detection by using different configurations of an obstacle detection system according to an embodiment of this application;
FIG. 9 is a specific flowchart 2 for implementing obstacle detection by using different configurations of an obstacle detection system according to an embodiment of this application;
FIG. 10 is a specific flowchart 3 for implementing obstacle detection by using different configurations of an obstacle detection system according to an embodiment of this application; and
FIG. 11 is a specific flowchart 4 for implementing obstacle detection by using different configurations of an obstacle detection system according to an embodiment of this application.

### DESCRIPTION OF EMBODIMENTS

The following describes the embodiments of this application with reference to accompanying drawings.

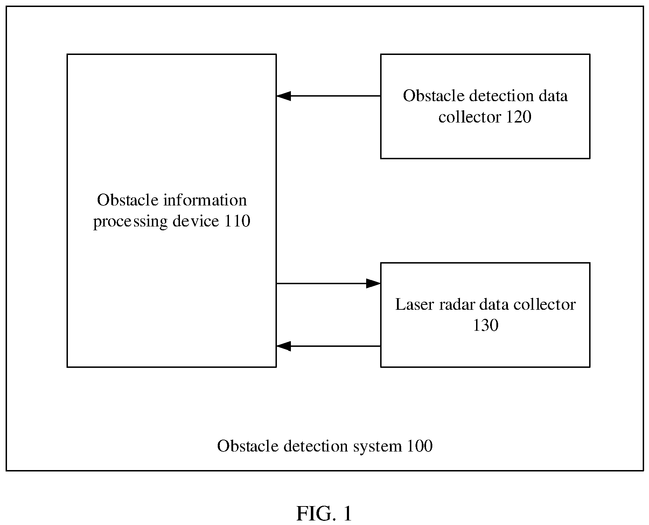

An embodiment of this application provides an obstacle detection system. As shown in FIG. 1, an obstacle detection system 100 includes an obstacle information processing device 110, an obstacle detection data collector 120, and a laser radar data collector 130. There may be a plurality of obstacle detection data collectors 120 and a plurality of laser radar data collectors 130. FIG. 1 is merely a schematic diagram. For example, the obstacle detection data collector may be a single sensor, such as a visual sensor or a millimeter-wave radar sensor. Alternatively, the obstacle detection data collector may be a combination of sensors, including a plurality of visual sensors and/or a plurality of millimeter-wave radar sensors. It should be understood that the visual sensor and the millimeter-wave radar sensor mentioned above are merely used as examples. Alternatively, the obstacle detection data collector may be a sensor of another type.

The obstacle information processing device 110 can communicate with the obstacle detection data collector 120 and the laser radar data collector 130.

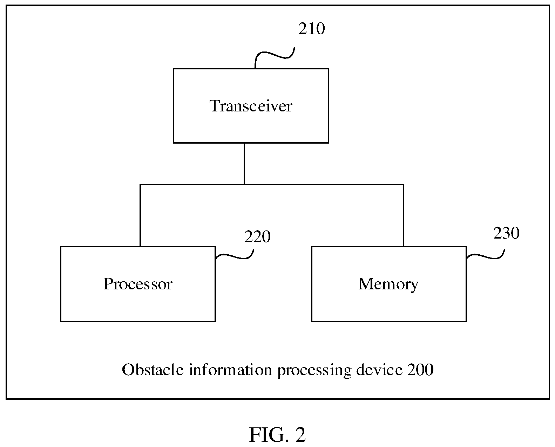

Specifically, as shown in FIG. 2, an obstacle information processing device 200 includes a transceiver 210, a processor 220, and a memory 230.

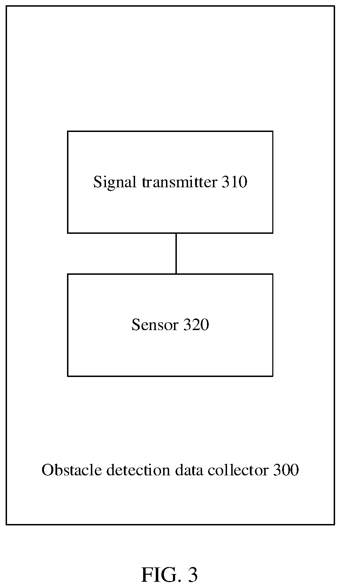

As shown in FIG. 3, each obstacle detection data collector 300 may include a signal transmitter 310, a sensor 320, and the like. It should be noted that the obstacle detection data collector in this embodiment of this application is not improved.

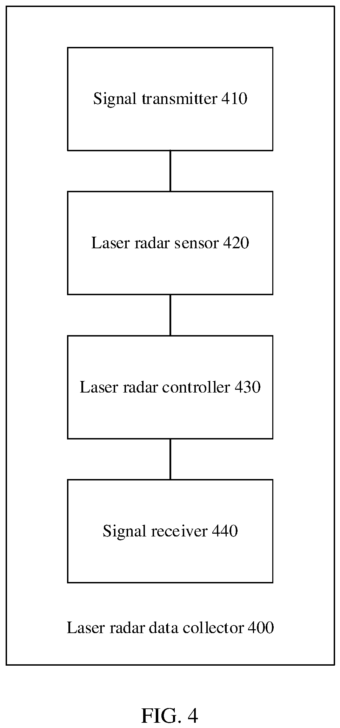

As shown in FIG. 4, a laser radar data collector 400 includes a signal transmitter 410, a laser radar sensor 420, a laser radar controller 430, and a signal receiver 440. The signal transmitter 410 is connected to the laser radar sensor 420. The signal receiver 440 is connected to the laser radar controller 430. The laser radar sensor 420 is connected to the laser radar controller 430. For example, the laser radar sensor herein may be a solid-state laser radar sensor that can control laser signal transmission. In addition, the laser radar data collector in this embodiment of this application is different from a laser radar sensor mentioned in the prior art. The following describes related improvement of the laser radar data collector in detail.

It should be understood that a target transport means in this application may be various vehicles, bicycles, motorcycles, electric vehicles, or the like.

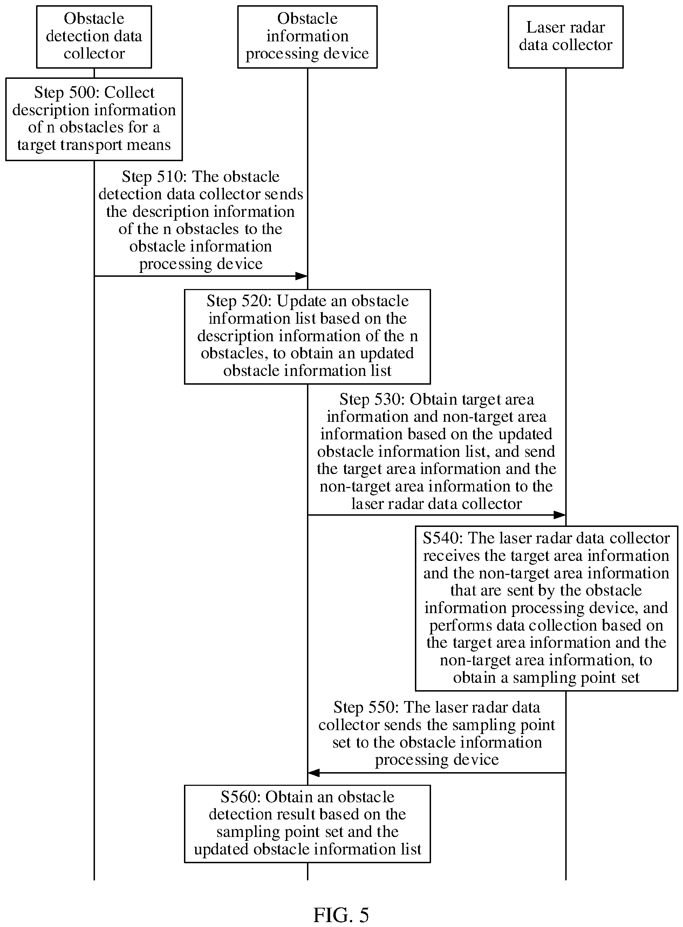

With reference to the obstacle detection system and the devices in the obstacle detection system shown in FIG. 1 to FIG. 4, this application provides an obstacle detection method, to improve obstacle recognition precision and avoid a relatively large data processing volume. As shown in FIG. 5, the method includes the following steps.

Step 500: An obstacle detection data collector collects description information of n obstacles for a target transport means, where n is a positive integer.

Step 510: The obstacle detection data collector sends the description information of the n obstacles to an obstacle information processing device.

Specifically, the obstacle detection data collector is disposed on the target transport means. The obstacle detection data collector may periodically perform data collection to obtain description information of an obstacle, and then send the obtained description information of the obstacle to the obstacle information processing device. The description information of the obstacle herein varies with the obstacle detection data collector. When the obstacle detection data collector is a millimeter-wave radar sensor, the millimeter-wave radar sensor may collect distance information, azimuth information, speed information, and the like of the obstacle as the description information of the obstacle. For example, the millimeter-wave radar sensor collects description information of three obstacles. The description information of the three obstacles is marked as A, B, and C and is sent to the obstacle information processing device, and specifically includes the following:
A(01, d1, s1),
B (θ2, d2, s2), and
C (θ3, d3, s3), where
θ indicates an obstacle azimuth, d indicates a distance between an obstacle and the target transport means, and s indicates an obstacle speed.

Step 520: The obstacle information processing device receives the description information of the n obstacles sent by the obstacle detection data collector, and updates an obstacle information list based on the description information of the n obstacles, to obtain an updated obstacle information list.

Step 530: The obstacle information processing device obtains target area information and non-target area information based on the updated obstacle information list, and sends the target area information and the non-target area information to a laser radar data collector.

The target area information is used to indicate at least one target area, and the non-target area information is used to indicate at least one non-target area. The target area is an area including an obstacle, and the non-target area is an area including no obstacle. Alternatively, the target area is an area that includes an obstacle meeting a preset screening condition, and the non-target area is an area that includes no obstacle meeting the preset screening condition.

Step 540: The laser radar data collector receives the target area information and the non-target area information that are sent by the obstacle information processing device, and performs data collection based on the target area information and the non-target area information, to obtain a sampling point set.

The sampling point set includes a quantity of sampling points collected by the laser radar data collector in the at least one target area and a quantity of sampling points collected by the laser radar data collector in the at least one non-target area. In addition, a quantity of sampling points collected in a unit volume of each target area is greater than a quantity of sampling points collected in a unit volume of each non-target area.

Step 550: The laser radar data collector sends the sampling point set to the obstacle information processing device.

Step 560: The obstacle information processing device receives the sampling point set sent by the laser radar data collector, and obtains an obstacle detection result based on the sampling point set and the updated obstacle information list.

In a possible implementation, after the obstacle information processing device obtains the obstacle detection result, the obstacle information processing device replaces the updated obstacle information list with the obstacle detection result, and uses the obstacle detection result as an obstacle information list used for performing step 520 next time.

Further, the obstacle information processing device sends the obstacle detection result to another module in the target transport means for reference, for example, a planning and decision module in a vehicle driving controller.

In a possible implementation, the target area information further includes a first signal transmission parameter, and the non-target area information further includes a second signal transmission parameter. The first signal transmission parameter is greater than the second signal transmission parameter.

This parameter configuration is mainly used in a scenario in which it is relatively easy to control laser signal transmission of a laser radar collector. A laser signal is transmitted by using a relatively large signal transmission parameter in the target area, and a relatively large quantity of sampling points are obtained in the unit volume. Therefore, this can effectively ensure precision of contour information of the obstacle. A laser signal is transmitted by using a relatively small signal transmission parameter in the non-target area, and a relatively small quantity of sampling points are obtained in the unit volume. Therefore, this can reduce a data processing volume.

In a possible implementation, the target area information further includes a first signal receiving sampling parameter, and the non-target area information further includes a second signal receiving sampling parameter. The first signal receiving sampling parameter is greater than the second signal receiving sampling parameter.

This parameter configuration is mainly used in a scenario in which it is relatively difficult to control a laser transmit signal of the laser radar collector. A relatively large signal receiving sampling parameter, namely, a high sampling rate, is used in the target area, and a relatively large quantity of sampling points are obtained in the unit volume. Therefore, this can effectively ensure precision of contour information of the obstacle. A relatively small signal receiving sampling parameter, namely, a low sampling rate, is used in the non-target area, and a relatively small quantity of sampling points are obtained in the unit volume. Therefore, this can reduce a data processing volume.

Therefore, the laser radar data collector uses different parameters for the target area and the non-target area, so that precision of contour information of an obstacle obtained for the target area is higher than precision of contour information of an obstacle obtained for the non-target area. This avoids a relatively large data processing volume. Therefore, resource utilization of the obstacle information processing device can be increased while obstacle recognition precision is ensured.

It should be understood that, in a possible implementation, the target area information includes the first signal transmission parameter, and the non-target area information includes the second signal transmission parameter. In addition, the target area information further includes the first signal receiving sampling parameter, and the non-target area information further includes the second signal receiving sampling parameter. In other words, two or more groups of optional parameters are provided, so that the laser radar data collector selects one group of parameters or two groups of parameters (for example, selects one group of parameters for transmission and one group of parameters for receiving) for data collection.

In addition, when the target area information does not include the first signal transmission parameter, and the non-target area information does not include the second signal transmission parameter, and when the target area information does not include the first signal receiving sampling parameter, and the non-target area information does not include the second signal receiving sampling parameter, a laser radar controller in the laser radar data collector may separately perform data collection in the target area and the non-target area based on two preconfigured signal transmission parameters and/or two preconfigured signal receiving sampling parameters.

The following separately describes in detail possible implementations of step 520, step 530, and step 560 mentioned above.

For step 520, that the obstacle information processing device updates an obstacle information list based on the description information of the n obstacles, to obtain an updated obstacle information list may include the following two cases:
Case 1: The obstacle information list is null.

In this case, the obstacle information processing device directly adds the description information of the n obstacle to the obstacle information list, and obtains the updated obstacle information list.

Case 2: The obstacle information list is non-null.

In this case, the obstacle information processing device may update the obstacle information list by using, but not limited to, the following method.

Specifically, the obstacle information processing device obtains n first distances based on the description information of the n obstacles. Each of the n first distances is distance between the target transport means and each of n obstacles corresponding to the description information of the n obstacles.

It should be understood that when the description information of the obstacle does not include the distance between the obstacle and the target transport means, the distance may be further obtained through calculation another parameter in the description information of the obstacle.

It is assumed that the obstacle information list includes m pieces of obstacle information, and m is a positive integer. The obstacle information processing device further needs to obtain m second distances based on the m pieces of obstacle information included in the obstacle information list. Each of the m second distances is distance between the target transport means and each of m obstacles corresponding to the m pieces of obstacle information.

It should be understood that there is no necessary sequence for obtaining the n first distances and the m second distances herein. When the obstacle information does not include the distance between the obstacle and the target transport means, the distance may be further obtained through calculation another parameter in the obstacle information.

Further, the following uses an i^{th} first distance as an example, and i is any integer of 1 to n, to describe several possible cases in which the obstacle information processing device updates the obstacle information list.
(1) When a difference between the i^{th} first distance and each second distance is greater than a preset threshold, the obstacle information processing device adds description information of an obstacle corresponding to the i^{th} first distance to the obstacle information list.
   It can be deduced from the foregoing description that the obstacle corresponding to the i^{th} first distance is a newly detected obstacle.
(2) When only a difference between the i^{th} first distance and the j^{th} second distance is less than or equal to the preset threshold, the obstacle information processing device determines that the obstacle corresponding to the i^{th} first distance is the same as an obstacle corresponding to the j^{th} second distance, and updates, based on the description information of the obstacle corresponding to the i^{th} first distance, obstacle information of the obstacle corresponding to the j^{th} second distance. The j^{th} second distance is any one of the m second distances.
   Therefore, the obstacle information processing device updates, by determining the obstacle same as the obstacle corresponding to the i^{th} first distance, the obstacle information that corresponds to the obstacle and that is in the obstacle information list.
(3) When each of t calculated differences between the i^{th} first distance and each of t second distances is less than or equal to the preset threshold, the obstacle information processing device determines that the obstacle corresponding to the i^{th} first distance is the same as an obstacle corresponding to a target second distance, and updates, based on the description information of the obstacle corresponding to the i^{th} first distance, obstacle information of the obstacle corresponding to the target second distance. The target second distance is a second distance corresponding to a smallest difference in the t differences, t ≤ m, and t is a positive integer.

In this case, because there are a plurality of differences between the second distances and the i^{th} first distance are less than or equal to the preset threshold, an obstacle that is the same as the obstacle corresponding to the i^{th} first distance need to be first determined. Herein, an obstacle corresponding to a second distance and that has a smallest difference with the i^{th} first distance is determined as an obstacle that is the same as the obstacle corresponding to the i^{th} first distance, and obstacle information corresponding to the obstacle in the obstacle information list is updated.

Therefore, in the foregoing process, each first distance is determined, and the obstacle information list is updated, and the obstacle information processing device obtains the updated obstacle information list.

With reference to a specific instance, the following describes how the obstacle information processing device updates the obstacle information list to obtain the updated obstacle information list.

It is assumed that the millimeter-wave radar sensor collects description information of three obstacles. The description information of the three obstacles is marked as A, B, and C, and specifically includes the following:
A(01, d1, s1),
B (θ2, d2, s2), and
C (θ3, d3, s3), where
θ indicates an obstacle azimuth, d indicates a distance between an obstacle and the target transport means, and s indicates an obstacle speed.

Therefore, three first distances, respectively d1, d2, and d3, may be obtained by the obstacle information processing device based on the description information of the three obstacles.

It is assumed that first obstacle information list includes three pieces of obstacle information. The three pieces of obstacle information are respectively marked as X, Y, and Z, and specifically include:
X (θx, dx, sx),
Y (θy, dy, sy), and
Z (θz, dz, sz).

Therefore, the obstacle information processing device may obtain three second distances based on the three pieces of obstacle information, and the three second distances are respectively dx, dy, and dz.

In an optional embodiment, the following uses d1 as an example to describe how to update the first obstacle information list.
(1) When a difference between d1 and dx, a difference between d1 and dy, and a difference between d1 and dz are all greater than the preset threshold, A (θ1, d1, s1) is added to the obstacle information list.
(2) When only the difference between d1 and dx is less than or equal to the preset threshold, A (θ1, d1, s1) is used to update X (θx, dx, sx).
(3) When the difference between d1 and dx, and the difference between d1 and dy are less than or equal to the preset threshold, and when the difference between d1 and dx is less than the difference between d1 and dy, A (01, d1, s1) is used to update X (θx, dx, sx).

In an optional embodiment, it is assumed that a difference between d1 and dx, a difference between d1 and dy, and a difference between d1 and dz all are greater than the preset threshold, a difference between d2 and dx is less than or equal to the preset threshold, and a difference between d3 and dz is less than or equal to the preset threshold, a difference between the d3 and the dy is less than or equal to the preset threshold, and the difference between the d3 and the dz is less than the difference between the d3 and the dy. Therefore, the obstacle information processing device updates the obstacle information list. The updated obstacle information list specifically includes:
A (θ1, d1, s1) corresponds to that the differences between d1 and each of dx, dy and dz are greater than the preset threshold, namely, A (θ1, d1, s1) is newly added obstacle information.
B (θ2, d2, s2) corresponds to that the difference between d2 and only dx is less than or equal to the preset threshold, namely, X (θx, dx, sx) is updated by using B (θ2, d2, s2).
C (θ3, d3, s3) corresponds to that the differences between d3 and either of dz and dy are less than or equal to the preset threshold, and the difference between d3 and dz is less than the difference between d3 and dy, namely, Z (θz, dz, sz) is updated by using C (θ3, d3, s3).
Y (0y, dy, sy) is reserved.

It should be understood that the foregoing update rules are based on the distance between the obstacle and the target transport means, or may use or be based on another parameter, for example, the obstacle direction angle.

In addition, when the obstacle detection data collector is a sensor combination, the obstacle information list needs to be updated by using the description information of the obstacle separately collected by the plurality of sensors. A specific process is not described in detail again.

If a time interval at which the obstacle detection data collector collects the description information of the obstacle for the target transport means is relatively large, each piece of obstacle information in the obstacle information list may be further predicted with reference to a motion status of the target transport means and the obstacle information list, to ensure time synchronization between each piece of information. Then, matching is performed based on the predicted obstacle information list and the description information of the obstacle collected by the obstacle detection data collector, to ensure accuracy of the updated obstacle information list.

For step 530, the obstacle information processing device obtains the target area information and the non-target area information based on the updated obstacle information list, the updated obstacle information list includes at least one piece of obstacle information, and each piece of obstacle information includes a direction angle of an obstacle. Specifically, the target area information and the non-target area information may be obtained in, but not limited to, the following two manners:
Manner 1: The obstacle information processing device determines a direction angle interval of one target area as the target area information based on the obstacle direction angle included in each piece of obstacle information. The target area is the area including an obstacle.

Further, the obstacle information processing device determines a direction angle interval of the at least one non-target area as the non-target area information based on the target area information and a maximum direction angle collection range of the laser radar data collector. The non-target area is the area including no obstacle.

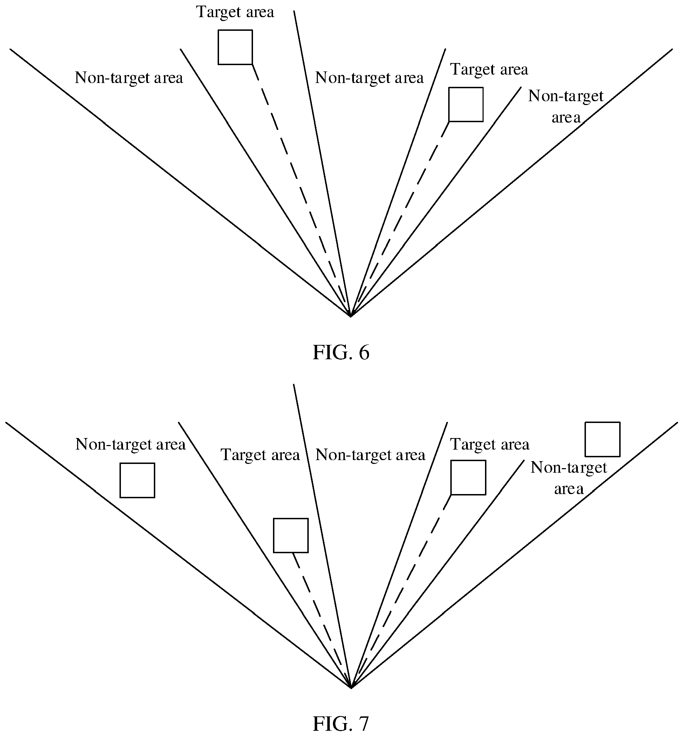

For example, if the updated obstacle information list includes two pieces of obstacle information, after extending a preset angle to two sides based on a direction angle parameter included in each piece of obstacle information, the obstacle information processing device uses the extended preset angles as the direction angle interval of the target area. Therefore, as shown in FIG. 6, two obstacles respectively correspond to two target area direction angle intervals. The two target area direction angle intervals are used as the target area information. Other areas other than the target area are further used as the non-target area based on the maximum direction angle collection range of the laser radar data collector, direction angle intervals of three non-target areas are obtained and used as the non-target area information.

Second manner: The obstacle information processing device obtains, through screening from the at least one piece of obstacle information based on the at least one piece of obstacle information and the preset screening condition, at least one piece of obstacle information meeting the preset screening condition, and then determines, based on an obstacle direction angle included in each piece of obstacle information meeting the preset screening condition, a direction angle interval of the target area as the target area information. The target area is the area that includes the obstacle meeting the preset screening condition.

Further, the obstacle information processing device determines the direction angle interval of the at least one non-target area as the non-target area information based on the target area information and the maximum direction angle collection range of the laser radar data collector. The non-target area is the area that includes no obstacle meeting the preset screening condition.

For example, the obstacle information processing device may determine, based on the at least one piece of obstacle information, whether the obstacle is a dynamic obstacle (namely, the preset screening condition) based on a speed of the obstacle. When determining that the obstacle is the dynamic obstacle, the obstacle information processing device uses the obstacle as the obstacle meeting the preset screening condition, and obtains the direction angle interval of the target area based on the obstacle direction angle included in the obstacle information of the obstacle.

Alternatively, the obstacle information processing device may determine, based on the at least one piece of obstacle information and a distance between the obstacle and the target transport means, whether the obstacle is a nearly located obstacle (namely, the preset screening condition). For example, a threshold is set, and when the distance between the obstacle and the target transport means is less than the threshold. When determining that the obstacle is the nearly located obstacle, the obstacle information processing device uses the obstacle as the obstacle meeting the preset screening condition, and obtains the direction angle interval of the target area based on the obstacle direction angle included in the obstacle information of the obstacle.

Alternatively, the obstacle information processing device may determine, based on the at least one piece of obstacle information and the obstacle azimuth, whether the obstacle is an obstacle in a driving direction of the target transport means (namely, the preset screening condition). When determining that the obstacle is the obstacle in the driving direction of the target transport means, the obstacle information processing device uses the obstacle as the obstacle meeting the preset screening condition, and obtains the direction angle interval of the target area based on the obstacle direction angle included in the obstacle information of the obstacle.

Alternatively, the obstacle information processing device may use a nearly located dynamic obstacle as the obstacle meeting the preset screening condition, and obtain the direction angle interval of the target area based on the obstacle direction angle included in the obstacle information of the obstacle.

By using the foregoing methods, the obstacle information processing device first screens, by using the preset screening condition based on the at least one piece of obstacle information, the obstacle meeting the preset screening condition, and then obtains the direction angle interval of the target area based on the obstacle direction angle included in the obstacle information corresponding to the obstacle meeting the preset screening condition. Therefore, the obstacle information processing device first screens the obstacle meeting the preset screening condition, to decrease a quantity of finally obtained target areas, and to further decrease a quantity of sampling points that the laser radar data collector needs to collect, and reduce a data processing volume of the obstacle information processing device.

For example, a second obstacle information list includes four pieces of obstacle information, and the obstacle information processing device may use a nearly located dynamic obstacle as the obstacle meeting the preset screening condition. As shown in FIG. 7, there are two obstacles meeting the preset screening condition. Direction angle intervals of two target areas are determined based on obstacle direction angles respectively included in obstacle information of the two obstacles. Direction angle intervals of three non-target areas are further obtained based on the maximum direction angle collection range of the laser radar data collector. It should be noted that, in this case, the non-target area also includes an obstacle.

In addition, the obstacle information processing device may further predict each piece of obstacle information in the updated obstacle information list with reference to the motion status of the target transport means and the updated obstacle information list, to ensure time synchronization between each piece of information. Then, the target area information and the non-target area information are obtained based on the predicted obstacle information list. Therefore, accuracy of the determined target area can be better ensured.

For step 560, the obstacle information processing device may obtain, based on the sampling point set and the updated obstacle information list, the obstacle detection result by using, but not limited to, the following method.

An example k^{th} piece of obstacle information included in the updated obstacle information list is used as to describe how the obstacle information processing device obtains the obstacle detection result. The k^{th} piece of obstacle information is any one of the at least one piece of obstacle information included in the updated obstacle information list.

The obstacle information processing device determines a direction angle interval of a k^{th} area based on an obstacle direction angle included in the k^{th} piece of obstacle information. Then, the obstacle information processing device determines a k^{th} target sampling point set from the sampling point set based on the direction angle interval of the k^{th} area. The k^{th} target sampling point set includes a sampling point that is in the sampling point set and that is collected at the direction angle interval of the k^{th} area.

For example, an obstacle direction angle included in the k^{th} piece of obstacle information is θk, the direction angle interval of the k^{th} area is (θk - 5°, θk + 5°), and the k^{th} target sampling point set includes a sampling point that is in the sampling point set and that is collected in the (θk - 5°, θk + 5°) area.

Further, the obstacle information processing device obtains contour information of at least one obstacle based on the k^{th} target sampling point set.

Specifically, the obstacle information processing device processes the k^{th} target sampling point set, for example, performs data clustering, to obtain the contour information of the at least one obstacle. For example, because there may be a plurality of obstacles in the (θk - 5°, θk + 5°) area, and distances between the obstacles and the target transport means are different, contour information of the plurality of obstacles may be obtained.

Then, the obstacle information processing device obtains at least one determining distance based on the contour information of the at least one obstacle. Each determining distance is a difference between a distance from the target transport means to each obstacle corresponding to contour information of each obstacle and a distance from the target transport means to an obstacle corresponding to the k^{th} piece of obstacle information.

For example, it is assumed that the obstacle information processing device obtains contour information of two obstacles, respectively marked as A1 and A2. Further, a distance S1 between an obstacle corresponding to A1 and the target transport means, and a distance S2 between an obstacle corresponding to A2 and the target transport means are obtained based on A1 and A2. A difference between S1, and the distance between the obstacle corresponding to the k^{th} piece of obstacle information and the target transport means, and a difference between S2, and the distance between the obstacle corresponding to the k^{th} piece of obstacle information and the target transport means are calculated to obtain two determining distances.

In this case, comparing each determined distance with a preset distance threshold may include the following several cases:
Case 1: The obstacle information processing device uses a first detection result as the obstacle detection result. The first detection result includes contour information of an obstacle corresponding to a determining distance that is in the at least one determining distance and is greater than the preset distance threshold.

Specifically, when the determining distance is greater than the preset distance threshold, it may be deduced that an obstacle corresponding to the determining distance is a newly detected obstacle, and contour information of the obstacle is used as the obstacle detection result. For example, if the contour information of the obstacle is PI, and the obstacle is marked as X1, the obstacle detection result is marked as X1 (PI).

Case 2: The obstacle information processing device uses a second detection result and the k^{th} piece of obstacle information as the obstacle detection result. The second detection result is contour information of an obstacle corresponding to a determining distance that is in the at least one determining distance and that is less than or equal to the preset distance threshold.

When the determining distance is less than or equal to the preset distance threshold, the obstacle corresponding to the determining distance is the same as the obstacle corresponding to the k^{th} piece of obstacle information. Therefore, both the contour information of the obstacle corresponding to the determining distance and the k^{th} piece of obstacle information may be used as the obstacle detection result. For example, if the contour information of the obstacle is PI, and the k^{th} piece of obstacle information is marked as K (θk, dk, sk), the obstacle detection result is marked as K (θk, dk, sk, P1).

In addition, when the obstacle information processing device does not determine the target sampling point set, the following three processing manners may be further included:
(1) The obstacle information processing device determines that the obstacle detection result does not include the k^{th} piece of obstacle information.
   Because the obstacle information processing device does not determine the k^{th} target sampling point set, it indicates that related data of the obstacle corresponding to the k^{th} piece of obstacle information is not collected by the laser radar data collector, the obstacle corresponding to the k^{th} piece of obstacle information may be away from the target transport means, and the k^{th} piece of obstacle information is no longer used as the obstacle detection result.
(2) If the target area information includes the direction angle interval of the k^{th} area, in other words, the obstacle corresponding to the k^{th} piece of obstacle information is the obstacle meeting the preset screening condition, the obstacle information processing device determines that the obstacle detection result does not include the k^{th} piece of obstacle information.
   The obstacle corresponding to the k^{th} piece of obstacle information is the obstacle meeting the preset screening condition. The direction angle interval of the k^{th} area corresponding to the obstacle is the target area. A large quantity of sampling points are collected by the laser radar data collector. However, in this case, the k^{th} target sampling point set is not determined. Therefore, it may be basically determined that the obstacle corresponding to the k^{th} piece of obstacle information is away from the target transport means.
(3) If the target area information does not include the direction angle interval of the k^{th} area, in other words, the obstacle corresponding to the k^{th} piece of obstacle information is not the obstacle meeting the preset screening condition, a preset value of an obstacle existence probability included in the k^{th} piece of obstacle information is reduced to obtain updated k^{th} piece of obstacle information, and the updated k^{th} piece of obstacle information is used as the obstacle detection result. Each piece of obstacle information includes an obstacle existence probability.

In this case, the obstacle corresponding to the k^{th} piece of obstacle information is not the obstacle meeting the preset screening condition. The obstacle exists in the non-target area, in this case, the laser radar data collector obtains a relatively small quantity of sampling points. The relatively small quantity of sampling points may be insufficient to obtain contour information of the obstacle. Therefore, the obstacle information corresponding to the obstacle is not deleted, but a preset value of an obstacle existence probability included in the obstacle information is reduced, to ensure comprehensiveness of the obstacle detection result.

Further, after the obstacle information processing device obtains the obstacle detection result based on the sampling point set and the target sampling point set corresponding to the at least one piece of obstacle information, the obstacle information processing device may further determine a non-target sampling point set, in other words, a remaining sampling point set, based on the sampling point set and the target sampling point set corresponding to the at least one piece of obstacle information.

The obstacle information processing device determines the contour information of the at least one obstacle based on the non-target sampling point set by using, for example, data clustering, and uses the contour information as a third detection result. The obstacle information processing device uses the third detection result as the obstacle detection result. Therefore, comprehensiveness of the obstacle detection result is ensured.

It should be understood that the laser radar collector has high data collection capacity and high precision, and a situation of obstacle misdetection exists in the millimeter-wave radar sensor. Therefore, even if the non-target area does not include an obstacle, the obstacle may still be detected by using the laser radar collector. In addition, the target transport means is always in a driving state, when the laser radar collector collects data, a new obstacle may further exists in the non-target area.

In addition, based on an idea same as the foregoing method, the obstacle information processing device first obtains the contour information of the at least one obstacle based on the sampling point set, and uses the contour information as a contour information set. In this case, the obstacle information processing device determines the direction angle interval of the k^{th} area based on the obstacle direction angle included in the k^{th} piece of obstacle information. Then, the obstacle information processing device determines a k^{th} target contour information set from the contour information set based on the direction angle interval of the k^{th} area. Next, the obstacle information processing device obtains the at least one determining distance based on the contour information of the at least one obstacle included in the k^{th} target contour information set. A subsequent processing process is the same as that in the foregoing method, and is not described herein again. Likewise, after the obstacle information processing device obtains the obstacle detection result based on the contour information set and a target contour information set corresponding to the at least one piece of obstacle information, the obstacle information processing device may use contour information in the contour information set except the target contour information set corresponding to the at least one piece of obstacle information as the obstacle detection result.

It should be understood that the obstacle information processing device may also not obtain contour information of any obstacle based on the sampling point set. In this case, it indicates that no obstacle is found in the collection range of the laser radar data collector.

In addition, the obstacle information processing device may further predict each piece of obstacle information in the updated obstacle information list with reference to the motion status of the target transport means and the updated obstacle information list, to ensure time synchronization between each piece of information. Then, the obstacle detection result is obtained based on the sampling point set and the predicted obstacle information list. Therefore, accuracy of the obstacle detection result can be better ensured.

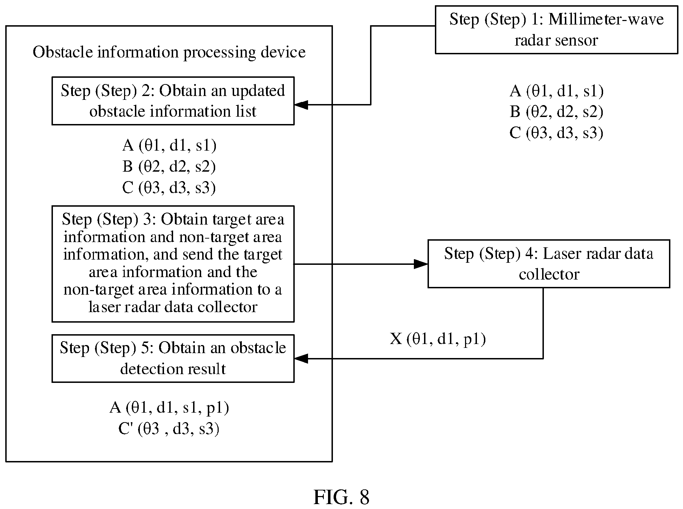

In an optional embodiment, FIG. 8 includes one millimeter-wave radar sensor.

Step (step) 1: The millimeter-wave radar sensor collects and sends description information of three obstacles to the obstacle information processing device. The description information of the three obstacles is marked as A, B, and C, and specifically includes the following:
A(01, d1, s1),
B (θ2, d2, s2), and
C (θ3, d3, s3), where
θ indicates an obstacle azimuth, d indicates a distance between an obstacle and the target transport means, and s indicates an obstacle speed.

Step 2: When an obstacle information list is null, the obstacle information processing device directly adds the description information of the three obstacles to the obstacle information list, to obtain an updated obstacle information list.

Step 3: The obstacle information processing device obtains the target area information and the non-target area information based on the updated obstacle information list, and sends the target area information and the non-target area information to the laser radar data collector.

For example, the obstacle information processing device selects an obstacle whose speed is greater than 0 as the obstacle meeting the preset screening condition, and uses, as the target area based on an azimuth that is of each obstacle meeting the preset screening condition and that is in the obstacle information, the direction angle separately extended clockwise and counterclockwise by an angle (for example, 5°). The other area is used as the non-target area. Assuming that s3 = 0, s1 > 0, and s2 > 0, an obstacle A and an obstacle B are selected as obstacles meeting the preset screening condition. Direction angle intervals of the two target areas are obtained, and respectively correspond to (θ1 - 5°, θ1 + 5°) and (θ2 - 5°, θ2 + 5°). The target area information further includes 0.5° horizontal resolution scanning of the target area, and the non-target area information further includes 2° horizontal resolution scanning of the non-target area.

Step 4: The laser radar data collector collects data based on the target area information and the non-target area information, and feeds back the sampling point set to the obstacle information processing device.

Step 5: The obstacle information processing device obtains the obstacle detection result based on the sampling point set and the updated obstacle information list.

Specifically, the obstacle information processing device obtains X (θ1, d1, p1) based on the sampling point set, where p1 represents the contour information of the obstacle. X (θ1, d1, p1) successfully matches A (θ1, d1, s1) in the second obstacle information list. Therefore, the obstacle A is reserved, the information of the obstacle A is updated to A (θ1, d1, s1, p1), and the information is used as the obstacle detection result. Because the obstacle B fails to match the contour information of the obstacle, and the obstacle B is the obstacle meeting the preset screening condition, obstacle information of the obstacle B is not used as the obstacle detection result. Although the obstacle C fails to match the contour information of the obstacle, because the obstacle C is not the obstacle meeting the preset screening condition, the obstacle C is temporarily reserved. However, an obstacle existence probability is reduced. The obstacle C is represented by C' (θ3, d3, s3), and is used as the obstacle detection result.

Finally, the obstacle detection result obtained by the obstacle information is:
A (θ1, d1 s1, p1) and
C' (θ3, d3, s3).

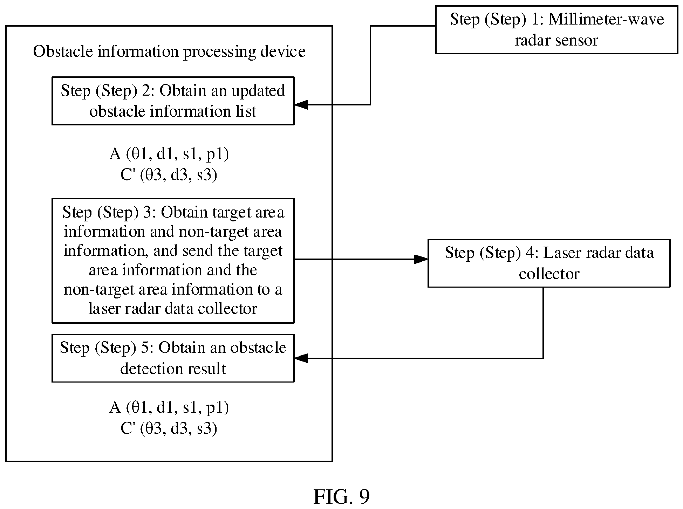

In an optional embodiment, referring to FIG. 9, the finally obtained obstacle detection result in the embodiment shown in FIG. 8 is used as an obstacle information list to be updated next time based on description information of an obstacle, in other words, the obstacle information list is added with feedback of a previous obstacle detection result, which can further improve reliability of the obstacle information list.

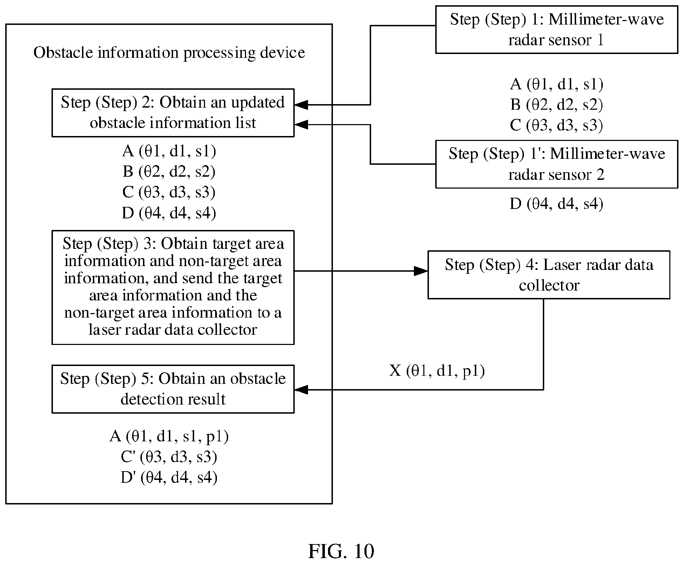

In an optional embodiment, FIG. 10 includes two millimeter-wave radar sensors, and other content is consistent with that in the embodiment shown in FIG. 8.

Step 1: A millimeter-wave radar sensor 1 collects and sends description information of three obstacles to the obstacle information processing device. The description information of the three obstacles is marked as A, B, and C.

Step 1': A millimeter-wave radar sensor 2 collects and sends description information of one obstacle to the obstacle information processing device. The description information of the obstacle is marked as D, and includes D (θ4, d4, s4).

Step 2: When an obstacle information list is null, the obstacle information processing device directly adds the description information of the four obstacles to the obstacle information list, to obtain a second obstacle information list.

Step 3: The obstacle information processing device obtains the target area information and the non-target area information based on the second obstacle information list, and sends the target area information and the non-target area information to the laser radar data collector.

It is assumed herein that this is consistent with the embodiment shown in FIG. 8. The obstacle information processing device selects the obstacle A and the obstacle B as the obstacles meeting the preset screening condition, obtains the target area information and the non-target area information, and sends the target area information and the non-target area information to the laser radar data collector.

Step 4: The laser radar data collector collects data based on the target area information and the non-target area information, and feeds back the sampling point set to the obstacle information processing device.

Step 5: The obstacle information processing device obtains the obstacle detection result based on the sampling point set and the updated obstacle information list.

It is assumed that this is consistent with the embodiment shown in FIG. 8, and the obstacle information processing device obtains X (θ1, d1, p1) based on the sampling point set. Therefore, the obstacle A is reserved, and the information of the obstacle A is updated to A (01, d1, s1, p1). The obstacle information of the obstacle B cannot be used as the obstacle detection result. Both a preset value of an obstacle existence probability in the obstacle information of the obstacle C and a preset value of an obstacle existence probability in the obstacle information of the obstacle D are reduced, and are respectively represented by C' (θ3, d3, s3) and D' (θ4, d4, s4).

Finally, the obstacle detection result obtained by the obstacle information is:
A (θ1, d1, s1, p1),
C' (θ3, d3, s3), and
D' (θ4, d4, s4).

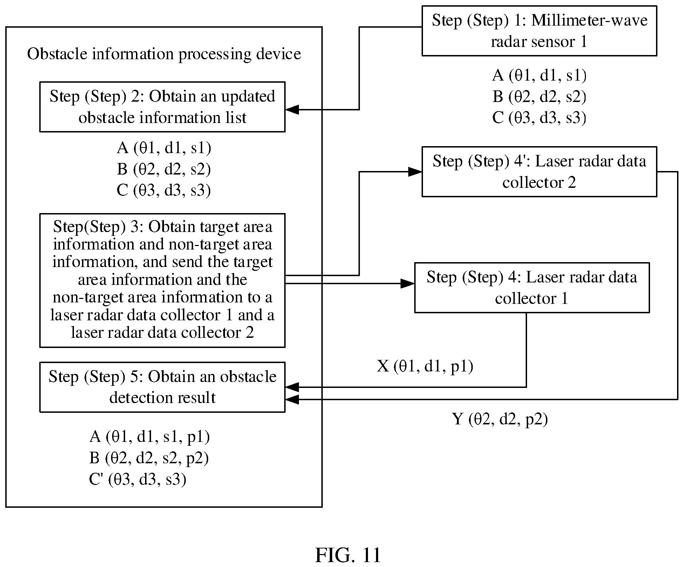

In an optional embodiment, FIG. 11 includes two laser radar data collectors, and other content is consistent with that in the embodiment shown in FIG. 8.

Step 1: A millimeter-wave radar sensor 1 collects and sends description information of three obstacles to the obstacle information processing device. The description information of the three obstacles is marked as A, B, and C.

Step 2: When an obstacle information list is null, the obstacle information processing device directly adds the description information of the three obstacles to the obstacle information list, to obtain an updated obstacle information list.

Step 3: The obstacle information processing device obtains the target area information and the non-target area information based on the updated obstacle information list, and sends the target area information and the non-target area information to the laser radar data collector.

It is assumed that this is consistent with the embodiment shown in FIG. 8. The obstacle information processing device selects the obstacle A and the obstacle B as the obstacles meeting the preset screening condition, obtains the target area information and the non-target area information, and sends the target area information and the non-target area information to a laser radar data collector 1 and a laser radar data sensor 2.

Step 4: The laser radar data collector 1 collects data based on the target area information and the non-target area information, and feeds back the sampling point set to the obstacle information processing device.

Step 4': The laser radar data collector 2 collects data based on the target area information and the non-target area information, and feeds back the sampling point set to the obstacle information processing device.

Step 5: The obstacle information processing device obtains the obstacle detection result based on the sampling point set and the updated obstacle information list.

It is assumed that this is consistent with the embodiment shown in FIG. 8. The obstacle information processing device obtains X (01, d1, p1) based on the sampling point set fed back by the laser radar data collector 1, and obtains Y (θ2, d2, p2) based on the sampling point set fed back by the laser radar data collector 2. Therefore, the obstacle A is reserved, and the information of the obstacle A is updated to A (θ1, d1, s1, p1). The obstacle B is reserved, and the information of the obstacle B is updated to B (θ2, d2, s2, p2). A preset value of an obstacle existence probability in the obstacle information of the obstacle C is reduced, and is represented by C' (θ3, d3, s3).

Finally, the obstacle detection result obtained by the obstacle information is:
A (θ1, d1, s1, p1),
B (θ2, d2, s2, p2), and
C' (θ3, d3, s3).

Based on a same concept, this application further provides an obstacle information processing device, and the device may be used to perform the method embodiment corresponding to the obstacle information processing device in FIG. 5. Therefore, for an implementation of the obstacle information processing device provided in this embodiment of this application, refer to the method implementation. Repeated content is not described again.

Referring to FIG. 2, an embodiment of this application provides an obstacle information processing device 200, including a transceiver 210, a processor 220, and a memory 230. The memory 230 is configured to store a program, an instruction, or code. The processor 220 is configured to execute the program, the instruction, or the code in the memory 230.

The transceiver 210 is configured to receive description information of n obstacles collected by an obstacle detection data collector for a target transport means, where n is a positive integer.

The processor 220 is configured to: update an obstacle information list based on the description information of the n obstacles, to obtain an updated obstacle information list, and obtain target area information and non-target area information based on the updated obstacle information list.

The transceiver 210 is configured to: send the target area information and the non-target area information to a laser radar data collector, so that a quantity of sampling points collected by the laser radar data collector in a unit volume of each target area is greater than a quantity of sampling points collected by the laser radar data collector in a unit volume of each non-target area, where the target area information is used to indicate at least one target area, the non-target area information is used to indicate at least one non-target area, the target area is an area including an obstacle, and the non-target area is an area including no obstacle, or the target area is an area that includes an obstacle meeting a preset screening condition, and the non-target area is an area that includes no obstacle meeting the preset screening condition; and receive a sampling point set collected by the laser radar data collector, where the sampling point set includes a quantity of sampling points collected by the laser radar data collector in the at least one target area and a quantity of sampling points collected by the laser radar data collector in the at least one non-target area.

The processor 220 is configured to obtain an obstacle detection result based on the sampling point set and the updated obstacle information list.

In a possible design, the obstacle detection data collector includes at least one visual sensor and/or at least one millimeter-wave radar sensor.

In a possible design, the target area information further includes a first signal transmission parameter, and the non-target area information further includes a second signal transmission parameter. The first signal transmission parameter is greater than the second signal transmission parameter.

In addition/Alternatively, the target area information further includes a first signal receiving sampling parameter, and the non-target area information further includes a second signal receiving sampling parameter. The first signal receiving sampling parameter is greater than the second signal receiving sampling parameter.

In a possible design, the obstacle information list includes m pieces of obstacle information, and m is a positive integer.

The processor 220 is configured to: obtain n first distances based on the description information of the n obstacles, where each of the n first distances is distance between the target transport means and each of the n obstacles corresponding to the description information of the n obstacles; and
obtain m second distances based on the m pieces of obstacle information included in the obstacle information list, where each of the m second distances is distance between the target transport means and each of m obstacles corresponding to the m pieces of obstacle information, and m is a positive integer; and
the updating the obstacle information list for an i^{th} first distance, where i is any integer from 1 to n, includes:
when a difference between the i^{th} first distance and each second distance is greater than a preset threshold, add description information of an obstacle corresponding to the i^{th} first distance to the obstacle information list;
when each of t calculated differences between the i^{th} first distance and each of t second distances is less than or equal to the preset threshold, determine that the obstacle corresponding to the i^{th} first distance is the same as an obstacle corresponding to a target second distance, and update, based on the description information of the obstacle corresponding to the i^{th} first distance, obstacle information of the obstacle corresponding to the target second distance, where the target second distance is a second distance corresponding to a smallest difference in the t differences, t ≤ m, and t is a positive integer; and
when only a difference between the i^{th} first distance and a j^{th} second distance is less than or equal to the preset threshold, determine that the obstacle corresponding to the i^{th} first distance is the same as an obstacle corresponding to the j^{th} second distance, and update, based on the description information of the obstacle corresponding to the i^{th} first distance, obstacle information of the obstacle corresponding to the j^{th} second distance, where the j^{th} second distance is any one of the m second distances.

In a possible design, the updated obstacle information list includes at least one piece of obstacle information, and each piece of obstacle information includes an obstacle direction angle.

The processor 220 is configured to:
determine a direction angle interval of one target area as the target area information based on the obstacle direction angle included in each piece of obstacle information, where the target area is the area including an obstacle; and
determine a direction angle interval of the at least one non-target area as the non-target area information based on the target area information and a maximum direction angle collection range of the laser radar data collector, where the non-target area is the area including no obstacle.

In a possible design, the updated obstacle information list includes at least one piece of obstacle information, and each piece of obstacle information includes an obstacle direction angle.

The processor 220 is configured to:
obtain, through screening from the at least one piece of obstacle information based on the at least one piece of obstacle information and the preset screening condition, at least one piece of obstacle information meeting the preset screening condition;
determine a direction angle interval of one target area as the target area information based on an obstacle direction angle included in each piece of obstacle information meeting the preset screening condition, where the target area is the area that includes an obstacle meeting the preset screening condition; and
determine a direction angle interval of the at least one non-target area as the non-target area information based on the target area information and a maximum direction angle collection range of the laser radar data collector, where the non-target area is the area that includes no obstacle meeting the preset screening condition.

In a possible design, the updated obstacle information list includes at least one piece of obstacle information, and each piece of obstacle information includes an obstacle direction angle.

The processor 220 is configured to:
determine a direction angle interval of a k^{th} area based on an obstacle direction angle included in a k^{th} piece of obstacle information, where the k^{th} piece of obstacle information is any one of the at least one piece of obstacle information;
determine a k^{th} target sampling point set from the sampling point set based on the direction angle interval of the k^{th} area, where the k^{th} target sampling point set includes a sampling point that is in the sampling point set and that is collected at the direction angle interval of the k^{th} area;
obtain contour information of at least one obstacle based on the k^{th} target sampling point set;
obtain at least one determining distance based on the contour information of the at least one obstacle, where each determining distance is a difference between a distance from the target transport means to an obstacle corresponding to contour information of the obstacle and a distance from the target transport means to an obstacle corresponding to the k^{th} piece of obstacle information; and
use a first detection result as the obstacle detection result, where the first detection result includes contour information of an obstacle corresponding to a determining distance that is greater than a preset distance threshold in the at least one determining distance, and/or use a second detection result and the k^{th} piece of obstacle information as the obstacle detection result, where the second detection result is contour information of an obstacle corresponding to a determining distance that is less than or equal to the preset distance threshold in the at least one determining distance.

In a possible design, the processor 220 is further configured to:
when the k^{th} target sampling point set is not determined, determine that the obstacle detection result does not include the k^{th} piece of obstacle information; or
when the k^{th} target sampling point set is not determined, if the target area information includes the direction angle interval of the k^{th} target area, determine that the obstacle detection result does not include the k^{th} piece of obstacle information; or if the target area information does not include the direction angle interval of the k^{th} target area, reduce a preset value of an obstacle existence probability included in the k^{th} piece of obstacle information, to obtain updated k^{th} piece of obstacle information; and use the updated k^{th} piece of obstacle information as the obstacle detection result, where each piece of obstacle information includes an obstacle existence probability.

In a possible design, the processor 220 is further configured to:
determine a non-target sampling point set based on the sampling point set and a target sampling point set corresponding to the at least one piece of obstacle information;
determine contour information of the at least one obstacle based on the non-target sampling point set, and use the contour information of the at least one obstacle as a third detection result; and
use the third detection result as the obstacle detection result.

In a possible design, the processor 220 is further configured to:
after the obstacle detection result is obtained based on the sampling point set and the updated obstacle information list, replace the updated obstacle information list with the obstacle detection result.

Based on a same concept, this application further provides a laser radar data collector. The device may be configured to perform the method embodiment corresponding to the laser radar data collector in FIG. 5. Therefore, for an implementation of the laser radar data collector provided in an embodiment of this application, refer to the method implementation, repeated content is not described again.

Referring to FIG. 4, this application provides a laser radar data collector 400, including: a signal transmitter 410, a laser radar sensor 420, a laser radar controller 430, and a signal receiver 440. The signal transmitter 410 is connected to the laser radar sensor 420. The signal receiver 440 is connected to the laser radar controller 430. The laser radar sensor 420 is connected to the laser radar controller 430.

The signal receiver 440 is configured to receive target area information and non-target area information that are sent by an obstacle information processing device. The target area information is used to indicate at least one target area, and the non-target area information is used to indicate at least one non-target area. The target area is an area including an obstacle, and the non-target area is an area including no obstacle. Alternatively, the target area is an area that includes an obstacle meeting a preset screening condition, and the non-target area is an area that includes no obstacle meeting the preset screening condition.

The laser radar controller 430 is configured to control, based on the target area information and the non-target area information, the laser radar sensor 420 to perform data collection.

The laser radar sensor 420 is configured to obtain a sampling point set. The sampling point set includes a quantity of sampling points collected in the at least one target area and a quantity of sampling points collected in the at least one non-target area. A quantity of sampling points collected in a unit volume of each target area is greater than a quantity of sampling points collected in a unit volume of each non-target area.

The signal transmitter 410 is configured to send the sampling point set to the obstacle information processing device.

In a possible design, the target area information further includes a first signal transmission parameter, and the non-target area information further includes a second signal transmission parameter. The first signal transmission parameter is greater than the second signal transmission parameter.

In addition/Alternatively, the target area information further includes a first signal receiving sampling parameter, and the non-target area information further includes a second signal receiving sampling parameter. The first signal receiving sampling parameter is greater than the second signal receiving sampling parameter.

In conclusion, the obstacle detection data collector first obtains description information of an obstacle collected by the obstacle detection data collector, then updates an obstacle information list, and obtains the target area information and the non-target area information based on an updated obstacle information list. In this way, the laser radar data collector obtains sampling point sets with different precision for different areas, thereby avoiding a relatively large data processing volume. The obstacle information processing device obtains the final obstacle detection result based on the obtained sampling point set and the updated obstacle information list. Therefore, according to the method provided in this embodiment of this application, the laser radar data collector obtains obstacle contour information with relatively high precision in the target area, and obstacle contour information with relatively low precision in the non-target area. In this way, not only obstacle recognition precision is ensured, but also a relatively large data processing volume is avoided. Therefore, problems such as a processing latency and a breakdown that are caused by excessive consumption of computing resources can be effectively avoided.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. Moreover, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may alternatively be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to the embodiments of this application without departing from the spirit and scope of this application. This application is also intended to cover these modifications and variations to embodiments of this application provided that they fall within the scope of protection defined by the following claims and their equivalent technologies.

## Claims

1. An obstacle detection method, comprising:
receiving, by an obstacle information processing device, description information of n obstacles collected by an obstacle detection data collector for a target transport means, wherein n is a positive integer;
updating, by the obstacle information processing device, an obstacle information list based on the description information of the n obstacles, to obtain an updated obstacle information list;
obtaining, by the obstacle information processing device, target area information and non-target area information based on the updated obstacle information list, and sending the target area information and the non-target area information to a laser radar data collector, so that a quantity of sampling points collected by the laser radar data collector in a unit volume of each target area is greater than a quantity of sampling points collected by the laser radar data collector in a unit volume of each non-target area, wherein the target area information is used to indicate at least one target area, the non-target area information is used to indicate at least one non-target area, the target area is an area comprising an obstacle, and the non-target area is an area comprising no obstacle, or the target area is an area that comprises an obstacle meeting a preset screening condition, and the non-target area is an area that comprises no obstacle meeting the preset screening condition;
receiving, by the obstacle information processing device, a sampling point set collected by the laser radar data collector, wherein the sampling point set comprises a quantity of sampling points collected by the laser radar data collector in the at least one target area and a quantity of sampling points collected by the laser radar data collector in the at least one non-target area; and
obtaining, by the obstacle information processing device, an obstacle detection result based on the sampling point set and the updated obstacle information list.

2. The method according to claim 1, wherein the obstacle detection data collector comprises at least one visual sensor and/or at least one millimeter-wave radar sensor.

3. The method according to claim 1 or 2, wherein the target area information further comprises a first signal transmission parameter, the non-target area information further comprises a second signal transmission parameter, and the first signal transmission parameter is greater than the second signal transmission parameter; and/or
the target area information further comprises a first signal receiving sampling parameter, the non-target area information further comprises a second signal receiving sampling parameter, and the first signal receiving sampling parameter is greater than the second signal receiving sampling parameter.

4. The method according to any one of claims 1 to 3, wherein the obstacle information list comprises m pieces of obstacle information, and m is a positive integer;
the updating, by the obstacle information processing device, an obstacle information list based on the description information of the n obstacles, to obtain an updated obstacle information list comprises:
obtaining, by the obstacle information processing device, n first distances based on the description information of the n obstacles, wherein each of the n first distances is a distance between the target transport means and each of the n obstacles corresponding to the description information of the n obstacles; and
obtaining, by the obstacle information processing device, m second distances based on the m pieces of obstacle information comprised in the obstacle information list, wherein each of the m second distances is a distance between the target transport means and each of m obstacles corresponding to the m pieces of obstacle information; and
the updating, by the obstacle information processing device, the obstacle information list for an i^{th} first distance, wherein i is any integer from 1 to n comprises:
when a difference between the i^{th} first distance and each second distance is greater than a preset threshold, adding, by the obstacle information processing device, description information of an obstacle corresponding to the i^{th} first distance to the obstacle information list;
when each of t calculated differences between the i^{th} first distance and each of t second distances is less than or equal to the preset threshold, determining, by the obstacle information processing device, that the obstacle corresponding to the i^{th} first distance is the same as an obstacle corresponding to a target second distance, and updating, based on the description information of the obstacle corresponding to the i^{th} first distance, obstacle information of the obstacle corresponding to the target second distance, wherein the target second distance is a second distance corresponding to a smallest difference in the t differences, t ≤ m, and t is a positive integer; and
when only a difference between the i^{th} first distance and a j^{th} second distance is less than or equal to the preset threshold, determining, by the obstacle information processing device, that the obstacle corresponding to the i^{th} first distance is the same as an obstacle corresponding to the j^{th} second distance, and updating, based on the description information of the obstacle corresponding to the i^{th} first distance, obstacle information of the obstacle corresponding to the j^{th} second distance, wherein the j^{th} second distance is any one of the m second distances.

5. The method according to any one of claims 1 to 4, wherein the updated obstacle information list comprises at least one piece of obstacle information, and each piece of obstacle information comprises an obstacle direction angle; and
the obtaining, by the obstacle information processing device, target area information and non-target area information based on the updated obstacle information list comprises:
determining, by the obstacle information processing device, a direction angle interval of one target area as the target area information based on the obstacle direction angle comprised in each piece of obstacle information, wherein the target area is the area comprising an obstacle; and
determining, by the obstacle information processing device, a direction angle interval of the at least one non-target area as the non-target area information based on the target area information and a maximum direction angle collection range of the laser radar data collector, wherein the non-target area is the area comprising no obstacle.

6. The method according to any one of claims 1 to 4, wherein the updated obstacle information list comprises at least one piece of obstacle information, and each piece of obstacle information comprises an obstacle direction angle; and
the obtaining, by the obstacle information processing device, target area information and non-target area information based on the updated obstacle information list comprises:
obtaining, by the obstacle information processing device through screening from the at least one piece of obstacle information based on the at least one piece of obstacle information and the preset screening condition, at least one piece of obstacle information meeting the preset screening condition;
determining, by the obstacle information processing device, a direction angle interval of one target area as the target area information based on an obstacle direction angle comprised in each piece of obstacle information meeting the preset screening condition, wherein the target area is the area that comprises an obstacle meeting the preset screening condition; and
determining, by the obstacle information processing device, a direction angle interval of the at least one non-target area as the non-target area information based on the target area information and a maximum direction angle collection range of the laser radar data collector, wherein the non-target area is the area that comprises no obstacle meeting the preset screening condition.

7. The method according to any one of claims 1 to 6, wherein the updated obstacle information list comprises the at least one piece of obstacle information, and each piece of obstacle information comprises the obstacle direction angle; and
the obtaining, by the obstacle information processing device, an obstacle detection result based on the sampling point set and the updated obstacle information list comprises:
determining, by the obstacle information processing device, a direction angle interval of a k^{th} area based on an obstacle direction angle comprised in a k^{th} piece of obstacle information, wherein the k^{th} piece of obstacle information is any one of the at least one piece of obstacle information;
determining, by the obstacle information processing device, a k^{th} target sampling point set from the sampling point set based on the direction angle interval of the k^{th} area, wherein the k^{th} target sampling point set comprises a sampling point that is in the sampling point set and that is collected at the direction angle interval of the k^{th} area;
obtaining, by the obstacle information processing device, contour information of at least one obstacle based on the k^{th} target sampling point set;
obtaining, by the obstacle information processing device, at least one determining distance based on the contour information of the at least one obstacle, wherein each determining distance is a difference between a distance from the target transport means to an obstacle corresponding to contour information of the obstacle and a distance from the target transport means to an obstacle corresponding to the k^{th} piece of obstacle information; and
using a first detection result as the obstacle detection result, wherein the first detection result comprises contour information of an obstacle corresponding to a determining distance that is greater than a preset distance threshold in the at least one determining distance; and/or using a second detection result and the k^{th} piece of obstacle information as the obstacle detection result, wherein the second detection result is contour information of an obstacle corresponding to a determining distance that is less than or equal to the preset distance threshold in the at least one determining distance.

8. The method according to claim 7, further comprising:
when the obstacle information processing device does not determine the k^{th} target sampling point set, determining that the obstacle detection result does not comprise the k^{th} piece of obstacle information; or
when the obstacle information processing device does not determine the k^{th} target sampling point set, if the target area information comprises the direction angle interval of the k^{th} target area, determining that the obstacle detection result does not comprise the k^{th} piece of obstacle information; or if the target area information does not comprise the direction angle interval of the k^{th} target area, reducing a preset value of an obstacle existence probability comprised in the k^{th} piece of obstacle information, to obtain updated k^{th} piece of obstacle information; and using the updated k^{th} piece of obstacle information as the obstacle detection result, wherein each piece of obstacle information comprises an obstacle existence probability.

9. The method according to claim 7 or 8, further comprising:
determining, by the obstacle information processing device, a non-target sampling point set based on the sampling point set and a target sampling point set corresponding to the at least one piece of obstacle information;
determining, by the obstacle information processing device, the contour information of the at least one obstacle based on the non-target sampling point set, and using the contour information of the at least one obstacle as a third detection result; and
using, by the obstacle information processing device, the third detection result as the obstacle detection result.

10. The method according to any one of claims 1 to 9, wherein after the obtaining, by the obstacle information processing device, an obstacle detection result based on the sampling point set and the updated obstacle information list, the method further comprises:
replacing, by the obstacle information processing device, the updated obstacle information list with the obstacle detection result.

11. An obstacle detection method, comprising:
receiving, by a laser radar data collector, target area information and non-target area information that are sent by an obstacle information processing device, wherein the target area information is used to indicate at least one target area, the non-target area information is used to indicate at least one non-target area, the target area is an area comprising an obstacle, and the non-target area is an area comprising no obstacle, or the target area is an area that comprises an obstacle meeting a preset screening condition, and the non-target area is an area that comprises no obstacle meeting the preset screening condition;
performing, by the laser radar data collector, data collection based on the target area information and the non-target area information, to obtain a sampling point set, wherein the sampling point set comprises a quantity of sampling points collected by the laser radar data collector in the at least one target area and a quantity of sampling points collected by the laser radar data collector in the at least one non-target area, and a quantity of sampling points collected in a unit volume of each target area is greater than a quantity of sampling points collected in a unit volume of each non-target area; and
sending, by the laser radar data collector, the sampling point set to the obstacle information processing device.

12. The method according to claim 11, wherein the target area information further comprises a first signal transmission parameter, the non-target area information further comprises a second signal transmission parameter, and the first signal transmission parameter is greater than the second signal transmission parameter; and/or
the target area information further comprises a first signal receiving sampling parameter, the non-target area information further comprises a second signal receiving sampling parameter, and the first signal receiving sampling parameter is greater than the second signal receiving sampling parameter.

13. An obstacle information processing device, comprising a transceiver, a processor, and a memory, wherein the memory is configured to store a program, an instruction, or code, and the processor is configured to execute the program, the instruction, or the code in the memory;
the transceiver is configured to receive description information of n obstacles collected by an obstacle detection data collector for a target transport means, wherein n is a positive integer;
the processor is configured to: update an obstacle information list based on the description information of the n obstacles, to obtain an updated obstacle information list, and obtain target area information and non-target area information based on the updated obstacle information list;
the transceiver is configured to: send the target area information and the non-target area information to a laser radar data collector, so that a quantity of sampling points collected by the laser radar data collector in a unit volume of each target area is greater than a quantity of sampling points collected by the laser radar data collector in a unit volume of each non-target area, wherein the target area information is used to indicate at least one target area, the non-target area information is used to indicate at least one non-target area, the target area is an area comprising an obstacle, and the non-target area is an area comprising no obstacle, or the target area is an area that comprises an obstacle meeting a preset screening condition, and the non-target area is an area that comprises no obstacle meeting the preset screening condition; and receive a sampling point set collected by the laser radar data collector, wherein the sampling point set comprises a quantity of sampling points collected by the laser radar data collector in the at least one target area and a quantity of sampling points collected by the laser radar data collector in the at least one non-target area; and
the processor is configured to obtain an obstacle detection result based on the sampling point set and the updated obstacle information list.

14. The obstacle information processing device according to claim 13, wherein the obstacle detection data collector comprises at least one visual sensor and/or at least one millimeter-wave radar sensor.

15. The obstacle information processing device according to claim 13 or 14, wherein the target area information further comprises a first signal transmission parameter, the non-target area information further comprises a second signal transmission parameter, and the first signal transmission parameter is greater than the second signal transmission parameter; and/or
the target area information further comprises a first signal receiving sampling parameter, the non-target area information further comprises a second signal receiving sampling parameter, and the first signal receiving sampling parameter is greater than the second signal receiving sampling parameter.

16. The obstacle information processing device according to any one of claims 13 to 15, wherein the obstacle information list comprises m pieces of obstacle information, and m is a positive integer; and
the processor is configured to:
obtain n first distances based on the description information of the n obstacles, wherein each of the n first distances is distance between the target transport means and each of the n obstacles corresponding to the description information of the n obstacles;
obtain m second distances based on the m pieces of obstacle information comprised in the obstacle information list, wherein each of the m second distances is distance between the target transport means and each of m obstacles corresponding to the m pieces of obstacle information, and m is a positive integer; and
the updating the obstacle information list for an i^{th} first distance, wherein i is any integer from 1 to n, comprises:
when a difference between the i^{th} first distance and each second distance is greater than a preset threshold, add description information of an obstacle corresponding to the i^{th} first distance to the obstacle information list;
when each of t calculated differences between the i^{th} first distance and each of t second distances is less than or equal to the preset threshold, determine that the obstacle corresponding to the i^{th} first distance is the same as an obstacle corresponding to a target second distance, and update, based on the description information of the obstacle corresponding to the i^{th} first distance, obstacle information of the obstacle corresponding to the target second distance, wherein the target second distance is a second distance corresponding to a smallest difference in the t differences, t ≤ m, and t is a positive integer; and
when only a difference between the i^{th} first distance and a j^{th} second distance is less than or equal to the preset threshold, determine that the obstacle corresponding to the i^{th} first distance is the same as an obstacle corresponding to the j^{th} second distance, and update, based on the description information of the obstacle corresponding to the i^{th} first distance, obstacle information of the obstacle corresponding to the j^{th} second distance, wherein the j^{th} second distance is any one of the m second distances.

17. The obstacle information processing device according to any one of claims 13 to 16, wherein the updated obstacle information list comprises at least one piece of obstacle information, and each piece of obstacle information comprises an obstacle direction angle; and
the processor is configured to:
determine a direction angle interval of one target area as the target area information based on the obstacle direction angle comprised in each piece of obstacle information, wherein the target area is the area comprising an obstacle; and
determine a direction angle interval of the at least one non-target area as the non-target area information based on the target area information and a maximum direction angle collection range of the laser radar data collector, wherein the non-target area is the area comprising no obstacle.

18. The obstacle information processing device according to any one of claims 13 to 16, wherein the updated obstacle information list comprises at least one piece of obstacle information, and each piece of obstacle information comprises an obstacle direction angle; and
the processor is configured to:
obtain, through screening from the at least one piece of obstacle information based on the at least one piece of obstacle information and the preset screening condition, at least one piece of obstacle information meeting the preset screening condition;
determine a direction angle interval of one target area as the target area information based on an obstacle direction angle comprised in each piece of obstacle information meeting the preset screening condition, wherein the target area is the area that comprises an obstacle meeting the preset screening condition; and
determine a direction angle interval of the at least one non-target area as the non-target area information based on the target area information and a maximum direction angle collection range of the laser radar data collector, wherein the non-target area is the area that comprises no obstacle meeting the preset screening condition.

19. The obstacle information processing device according to any one of claims 13 to 18, wherein the updated obstacle information list comprises the at least one piece of obstacle information, and each piece of obstacle information comprises the obstacle direction angle; and
the processor is configured to:
determine a direction angle interval of a k^{th} area based on an obstacle direction angle comprised in a k^{th} piece of obstacle information, wherein the k^{th} piece of obstacle information is any one of the at least one piece of obstacle information;
determine a k^{th} target sampling point set from the sampling point set based on the direction angle interval of the k^{th} area, wherein the k^{th} target sampling point set comprises a sampling point that is in the sampling point set and that is collected at the direction angle interval of the k^{th} area;
obtain contour information of at least one obstacle based on the k^{th} target sampling point set;
obtain at least one determining distance based on the contour information of the at least one obstacle, wherein each determining distance is a difference between a distance from the target transport means to an obstacle corresponding to contour information of the obstacle and a distance from the target transport means to an obstacle corresponding to the k^{th} piece of obstacle information; and
use a first detection result as the obstacle detection result, wherein the first detection result comprises contour information of an obstacle corresponding to a determining distance that is in greater than a preset distance threshold the at least one determining distance, and/or use a second detection result and the k^{th} piece of obstacle information as the obstacle detection result, wherein the second detection result is contour information of an obstacle corresponding to a determining distance that is in the at least one determining distance and that is less than or equal to the preset distance threshold.

20. The obstacle information processing device according to claim 19, wherein the processor is further configured to:
when the k^{th} target sampling point set is not determined, determine that the obstacle detection result does not comprise the k^{th} piece of obstacle information; or
when the k^{th} target sampling point set is not determined, if the target area information comprises a direction angle interval of the k^{th} target area, determine that the obstacle detection result does not comprise the k^{th} piece of obstacle information, or if the target area information does not comprise the direction angle interval of the k^{th} target area, reduce a preset value of an obstacle existence probability comprised in the k^{th} piece of obstacle information, to obtain updated k^{th} piece of obstacle information; and use the updated k^{th} piece of obstacle information as the obstacle detection result, wherein each piece of obstacle information comprises an obstacle existence probability.

21. The obstacle information processing device according to claim 19 or 20, wherein the processor is further configured to:
determine a non-target sampling point set based on the sampling point set and a target sampling point set corresponding to the at least one piece of obstacle information;
determine contour information of the at least one obstacle based on the non-target sampling point set, and use the contour information of the at least one obstacle as a third detection result; and
use the third detection result as the obstacle detection result.

22. The obstacle information processing device according to any one of claims 13 to 21, wherein the processor is further configured to:
after the obstacle detection result is obtained based on the sampling point set and the updated obstacle information list, replace the updated obstacle information list with the obstacle detection result.

23. A laser radar data collector, comprising: a signal transmitter, a laser radar sensor, a laser radar controller, and a signal receiver, wherein the signal transmitter is connected to the laser radar sensor, the signal receiver is connected to the laser radar controller, and the laser radar sensor is connected to the laser radar controller;
the signal receiver is configured to receive target area information and non-target area information that are sent by an obstacle information processing device, wherein the target area information is used to indicate at least one target area, the non-target area information is used to indicate at least one non-target area, the target area is an area comprising an obstacle, and the non-target area is an area comprising no obstacle, or the target area is an area that comprises an obstacle meeting a preset screening condition, and the non-target area is an area that comprises no obstacle meeting the preset screening condition;
the laser radar controller is configured to control, based on the target area information and the non-target area information, the laser radar sensor to perform data collection;
the laser radar sensor is configured to obtain a sampling point set, wherein the sampling point set comprises a quantity of sampling points collected in the at least one target area and a quantity of sampling points collected in the at least one non-target area, and a quantity of sampling points collected in a unit volume of each target area is greater than a quantity of sampling points collected in a unit volume of each non-target area; and
the signal transmitter is configured to send the sampling point set to the obstacle information processing device.

24. The laser radar data collector according to claim 23, wherein the target area information further comprises a first signal transmission parameter, the non-target area information further comprises a second signal transmission parameter, and the first signal transmission parameter is greater than the second signal transmission parameter; and/or
the target area information further comprises a first signal receiving sampling parameter, the non-target area information further comprises a second signal receiving sampling parameter, and the first signal receiving sampling parameter is greater than the second signal receiving sampling parameter.

25. An obstacle detection system, comprising the obstacle information processing device and the obstacle detection data collector according to claims 13 to 22, and the laser radar data collector according to claims 23 to 24.
